(19) Europäisches Patentamt
European Patent Office
Office européen des brevets

(11) **EP 4 400 428 B1**

(12) **EUROPEAN PATENT SPECIFICATION**

(45) Date of publication and mention
of the grant of the patent:
**25.02.2026 Bulletin 2026/09**

(21) Application number: **23382017.4**

(22) Date of filing: **12.01.2023**

(51) International Patent Classification (IPC):
***B64F 1/305*** *(2006.01)*

(52) Cooperative Patent Classification (CPC):
**B64F 1/305**

(54) **SAFETY SYSTEM FOR A BOARDING BRIDGE AND BOARDING BRIDGE COMPRISING IT**

SICHERHEITSSYSTEM FÜR EINE FLUGGASTBRÜCKE UND FLUGGASTBRÜCKE DAMIT

SYSTÈME DE SÉCURITÉ POUR UNE PASSERELLE D'EMBARQUEMENT ET PASSERELLE D'EMBARQUEMENT LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**17.07.2024 Bulletin 2024/29**

(73) Proprietor: **Dimaim Systems S.L.**
**48940 Leioa (Vizcaya) (ES)**

(72) Inventor: **Fernández García, Eduardo**
**33006 Oviedo (ES)**

(74) Representative: **Clarke, Modet y Cía., S.L.**
**C/ Suero de Quiñones 34-36**
**28002 Madrid (ES)**

(56) References cited:
**CN-U- 206 141 864          JP-A- S63 188 599**
**US-A1- 2020 262 584**

## Description

## FIELD OF THE INVENTION

The present invention refers to the field of safety in the field of passenger transport. In particular, it relates to a safety system with application within the scope of passenger boarding and disembarking bridges, formed by at least three tunnels. Mainly, but not exclusively, it is applicable for aircraft or ships.

## BACKGROUND OF THE INVENTION

Passenger boarding bridges are mobile bridges that connect the terminal building with the entrance to aircraft or ships and allow passengers to board or disembark on foot, without the need to get off the platform, without the danger of precipitation and protected from inclement weather.

The boarding bridges are articulated, usually built with rigid interconnected tunnels, usually two or more, forming a telescopic structure. The boards have the possibility to extend or retract in length to adapt to different circumstances. For the gateways of three or more tunnels, on the one hand, cables keep the intermediate tunnel synchronously connected with the outer tunnel; on the other hand, they synchronously connect the intermediate tunnel with the inner tunnel. Through the cables the telescopic structure is acted on. The boards also have mechanisms to regulate their height and translation mechanisms to move laterally. The synchronized connection implies that the telescopic structure meets that, the variation in length between one tunnel and the next is equal to the variation in length between said tunnel and the previous one. The variation can be positive, with an increase in an extension maneuver. Alternatively, it may be negative, with decreasing telescopic structure in a retraction maneuver. The movements that generate a variation in the length of the bridge are called telescoping.

For various reasons (e.g. mechanical failure), uncontrolled movement may occur on a bridge. Such uncontrolled movement especially affects the intermediate tunnel (or intermediate tunnels). It is common for a violent jolt to occur and cause damage, both material and personal, even with fatal consequences.

Usually, the existing safety mechanisms to face this problem are based on monitoring the tension of the cables that keeps the intermediate tunnel interconnected with the outer tunnel and with the inner tunnel. In case of detecting a loss of tension in a cable, a safety problem is alerted and braking mechanisms can be activated. Although this technique is valid against the breakage of a cable, it poses disadvantages. Sometimes, it can generate false alarms. They occur when one of the cables loses voltage, even temporarily, for example, if the bridge is not horizontal. This technique presents another limitation related to the difficulty of carrying out periodic checks to verify the operation of the safety mechanism.

CN206141864U discloses a retractable boarding bridge channel with a safety brake. A steel wire rope device drives the boarding bridge channel to move during the retraction process of the boarding bridge channel. A detection device detects whether the steel wire rope is broken, the detection device is connected to a boarding bridge control system, so as to lock the mutual movement between adjacent channels after the steel wire rope is broken.

JPS63188599A discloses a method for operating aircraft boarding and alighting devices installed at airports and connected to the doors of parked aircraft to connect the aircraft to the airport building via a passageway. It includes controlling the movement of the aircraft, so the door is in a position ahead of the expected position of the aircraft door based on information previously given to a central control unit. The shape of the door is detected by comparing the image in the vicinity with the shape pattern of the door of each aircraft model previously stored and simultaneously analysing the relative positional relationship between the aircraft transit device and the door. According to this information, movement is controlled until contacting with a predetermined position of the aircraft door. A fine adjustment is then made by keeping close contact with the displacement of the aircraft.

US20200262584A1 discloses a boarding bridge having a transparent display for reproducing advertisements without hindering visibility of a transparent outer wall of the boarding bridge. The boarding bridge includes a first tunnel connected to a terminal gate, a second tunnel capable of overlapping with the first tunnel. Overlap detecting sensors detect, whether or not, the transparent displays of the first tunnel and the transparent displays of the second tunnel are overlapped with each other.

## DESCRIPTION OF THE INVENTION

The present invention relates to a safety system for a boarding bridge facing the limitations identified according to claim 1. Various advantageous embodiments are defined in the dependent claims.

It is a safety system for a telescopic boarding bridge of three tunnels or more that are connected by two cables. The system includes a process unit for examining a telescoping movement of the boarding bridge by a first sensor for measuring a first overlapping distance between a first pair of neighboring tunnels and by a second sensor for measuring a second overlapping distance between another second pair of neighboring tunnels. Said process unit allows to check if the telescoping movement is related to a retraction or extension maneuver of the bridge by the action of the cables. To this end, it determines (for example, periodically automatically or by user order) what variations have occurred in the overlapping distances during maneuvering. Then, the process unit compares both variations, and generates an alarm instruction when they are above a threshold. This threshold is safety and can be set for each maneuver in question.

Additionally, a warning (e.g., a minor alarm type) may be generated when although it is met to be below the safety threshold according to the above condition, but above a surveillance threshold. Optionally, the safety system has a control unit for receiving the alarm instruction and for stopping an ongoing maneuver of retraction or extension of the bridge.

Optionally, the control unit makes it possible to stop a maneuver in progress of translation or lifting of the bridge.

Optionally, the control unit may disable the start of a new maneuver, either of retraction, extension, translation or elevation of the bridge.

Optionally, the safety system incorporates a braking unit with one or more actuators to prevent a telescoping movement from occurring between neighboring tunnels. It can also prevent translation and/or lifting movements of the bridge.

Optionally, the safety system has a brake caliper electrically operable by an actuator. Preferably, for greater safety, it is designed so that, in the absence of electrical energy, said brake caliper is in a locking position.

Optionally, the safety system can perform checks on the sensors to confirm absence of faults.

Optionally, the safety system can implement a calibration/recalibration procedure for the sensors.

An object of the invention is also a bridge manufactured or modified to incorporate the safety system.

The safety system allows to infer a failure of a cable, such as its breakage, tensile deformation or loosening of its fixing, monitoring the consequences that such events would cause. To do this, the behavior of the bridge and tunnels in front of failure is modeled. By measuring relative length variations of the tunnels during retraction or extension of the bridge, i.e. overlapping distances, it is detected whether there is a desynchronization that is associated with a failure in any of the cables joining the tunnels of the bridge.

Advantageously, the safety system allows quick and easy checks of the braking unit to verify the correct operation of the system itself. A very important aspect, are checks that do not involve danger and do not cause damage to the bridge or the components where the safety system is installed.

## BRIEF DESCRIPTION OF THE DRAWINGS

Embodiments of the present invention are presented, by way of example only, in the accompanying drawings in which like elements are numbered in the same way.

FIG. 1 (prior art): Schematic of a conventional boarding bridge.

FIGs. 2A-2B (prior art): Schematic for the wiring of a conventional boarding bridge.

FIGs. 3A-3B (prior art): Situations in case of cable breakage of a boarding bridge.

FIGs. 4A-4D: Synchronization movements monitored according to the safety system.

FIGs. 5A-5B: Schematic side and top view of the bridge.

FIG. 6: Block diagram for one embodiment of the safety system.

FIG. 7: Block and signal diagram for an embodiment of the safety system.

Glossary of numerical references:

1 System.
2 Roundabout.
3 Lifting mechanism.
4 Translation mechanism.
5 Cabin.
10,100 boarding bridge.
11, 12 Sensor.
11a, 12a Coded band.
15a Braking unit actuator.
15b Translation and/or lifting actuator.
21,210 Inner tunnel.
22 Intermediate tunnel (single).
220 First intermediate tunnel.
230 Second intermediate tunnel.
23,240 Outer tunnel.
221 First pulley, fixed in intermediate tunnel (for short cable).
222 Second pulley, fixed in intermediate tunnel (for long cable).
223 First additional pulley, fixed in second intermediate tunnel (for additional short cable).
224 Second additional pulley, fixed in second intermediate tunnel (for additional long cable).
31 Anchor point for long cable in interior tunnel.
33 Anchor point for long cable in outer tunnel, or in the second intermediate tunnel.
34 Anchor point for short cable in outer tunnel, or in the second intermediate tunnel.
32 Anchor point for short cable in interior tunnel.
35 Anchor point for additional long cable in first intermediate tunnel.
36 Anchor point for additional short cable in outer tunnel.
37 Anchor point for additional long cable in outer tunnel.
38 Anchor point for additional short cable in second intermediate tunnel.
51 Long cable.
52 Short cable.
53 Additional long cable.

54 Additional short cable.

## DESCRIPTION OF EMBODIMENTS

With reference to the above figures, but not limited to, various embodiments of the invention are described for better understanding.

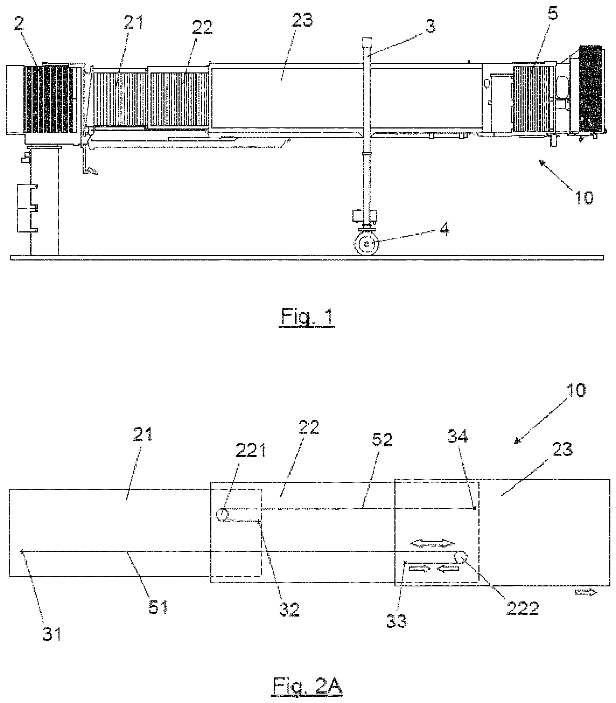

**FIG. 1** (prior art) schematically illustrates a conventional boarding bridge **10** where the present invention may be implemented.

The boarding bridge **10** includes three tunnels forming a telescopic structure. The inner tunnel **21** is fixed at one end to a roundabout **2.** Roundabout **2** is a rotating structure, generally connected to the facade of the terminal building, through which the boarding and disembarking of passengers is carried out. The opposite end of the inner tunnel **21** is connected with an intermediate tunnel **22** (although there may be several). The intermediate tunnel **22** is in turn connected at the other end with an outer tunnel **23**. The outer tunnel **23** communicates passengers with the entrance to the aircraft or ship (not shown). The outer tunnel **23** is adapted to the door of the aircraft or ship through a cabin **5** and, in addition, is provided with mechanisms for displacement. A translation mechanism **4** acts to apply a horizontal displacement, and a lifting mechanism **3** to apply a vertical displacement allowing it to adequately maneuver to engage the aircraft or ship. Generally, a portion of the outer tunnel **23** is accommodable within the intermediate tunnel **22,** and in turn, a portion of the intermediate tunnel **22** can be housed within the inner tunnel **21.** However, the telescopic configuration of the bridge could be different without affecting the solution proposed herein.

**FIG. 2A** (prior art) schematically illustrates the wiring mechanism associated with telescoping movement for a conventional boarding bridge 10 as shown in FIG. 1.

By telescoping movement is meant the movement to modify the length (by extension or retraction) of the boarding bridge **10** by the tunnels. This movement must be synchronized. Synchronized means that the intermediate tunnel or tunnels have to be moved at the same time as the outer tunnel and, in such a way that the variation in length, by extension or retraction of the bridge, is distributed equally between the tunnels. The above condition results in that the overlapping distances vary equally between tunnels.

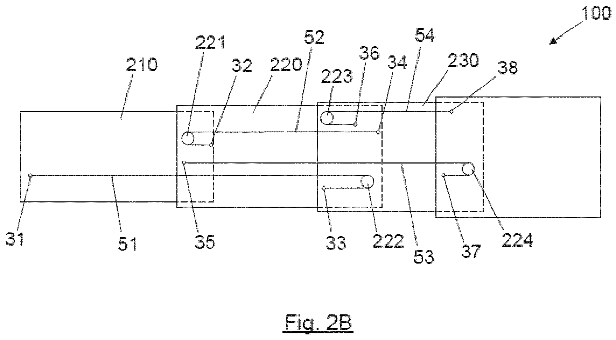

To achieve synchronization of the movement, the boarding bridges **10** with an intermediate tunnel **22** install synchronization wiring formed by a long cable **51** and a short cable **52**. Through pulleys **221, 222** which are each fixed to the lower part of the intermediate tunnel **22** the inner tunnel 21 is connected with the outer tunnel **23**. In the case of two or more intermediate tunnels a similar connection to the outer tunnel is made over the second intermediate tunnel, and so on. This case is explained in more detail in FIG. 2B.

The bridge **10** is moved back and forth directed by the outer tunnel **23** (according to the translation and lifting mechanisms). If the outer tunnel **23** moves forward, the short cable **52** is pulled from its anchor point **34** into the outer tunnel **23** itself. Thus, the intermediate tunnel **22** is drawn by the action of the first pulley **221** into the intermediate tunnel **22**. At the other end of the short cable **52** is the anchor point **32** near the end of the inner tunnel **21**.

If the outer tunnel **23** is moved backwards, the long cable **51** is pulled from its anchor point **33** attached to the outer tunnel **23** and the intermediate tunnel **22** is drawn by the action of the pulley at the end of the intermediate tunnel **222**. The other end of the short cable **52** is attached to the anchor point **31** of the inner tunnel **21**.

With the above configuration it is fulfilled that, for retraction or extension, the distance that the outer tunnel **23** travels with respect to the intermediate tunnel **22** is replicated by the intermediate tunnel **22** with respect to the inner tunnel **21** as long as the cables **51, 52** maintain their elongation and tension.

**FIG. 2B** schematically illustrates the wiring mechanism associated with the telescoping movements for a boarding bridge **100** with two intermediate tunnels, a first intermediate tunnel **220** and a second intermediate tunnel **230** (or additional intermediate tunnel).

The boarding bridges **100** with two intermediate tunnels **220, 230** install a synchronization wiring formed by four cables **51, 52, 53** and **54**. Through the pulleys **221, 222** fixed to the lower part of the first intermediate tunnel **220** the inner tunnel 210 is synchronized with the second intermediate tunnel **230**. By the pulleys **223, 224** fixed to the lower part of the second intermediate tunnel **230** the first intermediate tunnel **220** is synchronized with the outer tunnel **240**.

Briefly, everything indicated in FIG. 2A is applicable in the boarding bridge **100** taking into account that, in the embodiment of FIG. 2B, the outer tunnel **240** is equivalent to the outer tunnel **23** of FIG. 2A; the second intermediate tunnel **230** also makes the role of outer tunnel **23** of FIG. 2A but with respect to the first intermediate tunnel **220**.

In order to maintain the telescopic structure of the bridge **100**, there is a pair of additional pulleys **223, 224** attached to the second intermediate tunnel **230,** and additional synchronizing wiring with cables **53, 54** respectively connecting each pulley **223, 224** of the second intermediate tunnel **230** with the anterior and posterior (outer tunnel 240) neighboring tunnels (first intermediate tunnel **220**).

Thus, the first additional pulley **223** joins, via the additional short cable **54,** the anchor point **36** in the first intermediate tunnel **220** and the anchor point **38** in the outer tunnel **240**. The second additional pulley **224** joins, through the additional long cable **53,** the anchor point **35** in the first intermediate tunnel **220** and the anchor point **37** in the outer tunnel **240**.

The synchronization of the movement must be fulfilled between tunnels as in the previous case. During the telescoping movement, either to extend or retract the bridge **100,** it must occur that the overlapping distance traveled in extension or retraction maneuvers, is maintained between elements. In other words, the variation, increase or decrease, in the overlapping distance must be the same for any pair of consecutive tunnels of the bridge.

In this embodiment, the above implies that the distance traveled of the first intermediate tunnel **220** with respect to the inner tunnel **210** has to be the same as the distance traveled of the second intermediate tunnel **230** with respect to the first intermediate **220.** The same with the distance traveled of the outer tunnel **240** with respect to the second intermediate tunnel **230.** To this end, a safety system is proposed with sensors that measure these relative distances and avoid accidents due to wiring failures as illustrated in the following section.

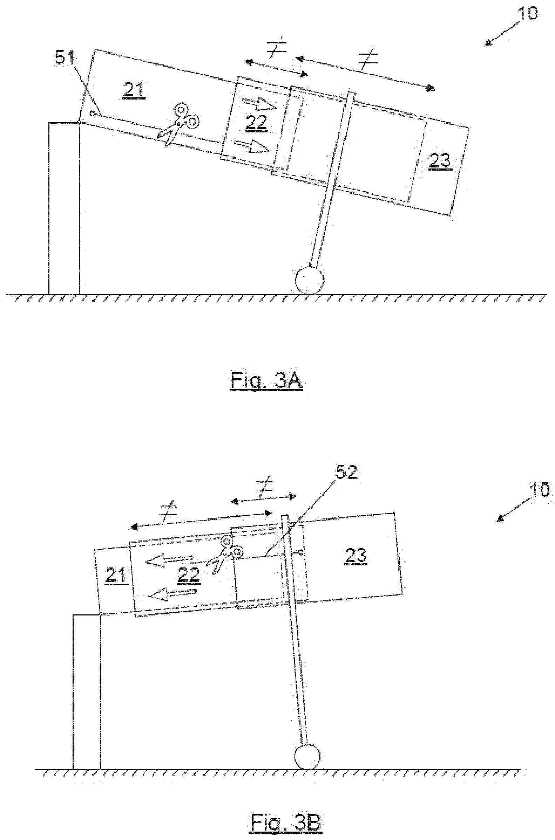

**FIGs. 3A-3B** show accidents in which one of the wires **51, 52** breaks.

**FIG. 3A** illustrates what may happen when the long pull cable 51 is broken. The long cable **51** supports the intermediate tunnel **22** when the bridge **10** is inclined below the horizontal line. If it fails, the intermediate tunnel **22** moves uncontrollably forward, in the direction of the aircraft or ship, in the absence of auxiliary locking mechanisms.

**FIG. 3B** illustrates what may happen if the short pull cable **52** is broken. The short cable **52** supports the intermediate tunnel **22** when the bridge **10** is inclined above the horizontal line. If it fails, and there are no auxiliary locking mechanisms to prevent it, the intermediate tunnel **22** moves uncontrollably backward, in the direction of the roundabout.

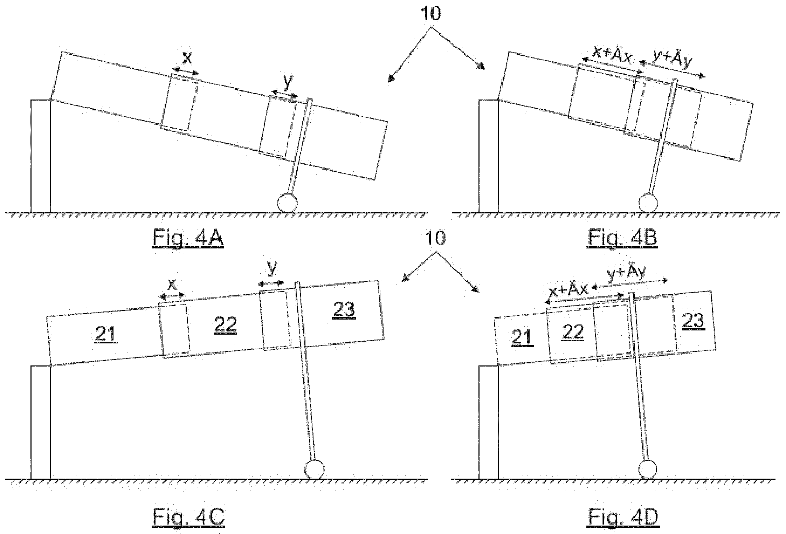

**FIGs. 4A-4D** show the operation of the system **1** where the movement of the tunnels **21, 22, 23** is checked to be appropriate. That is, be synchronized because it meets the following condition: that the variation of the overlapping distances (Δx, Δy) are equal. This implies that the cables properly transmit telescoping movement. Therefore, it must be checked by measuring that the distance traveled by the intermediate tunnel **22** with respect to the inner tunnel **21** is the same as the distance traveled by the outer tunnel **23** with respect to the intermediate tunnel **22.**

The formal condition to be checked by the process unit can be expressed mathematically as follows:

Equation          $E1$: $\Delta x = \Delta y$

These values are obtained from two sensors, where "x" is the overlapping distance measured directly/indirectly by a first linear sensor **11** in the first pair of neighboring tunnels. "y" is the overlapping distance measured directly/indirectly by the second linear sensor 12 in the second pair of neighboring tunnels.

In FIGs. 4A and 4B shows a retraction maneuver of the inclined bridge **10** with negative slope, where it is to be verified that equation $E1$ is fulfilled. In FIGs. 4C and 4D the same retraction maneuver is appreciated with the inclined bridge 10 with positive slope.

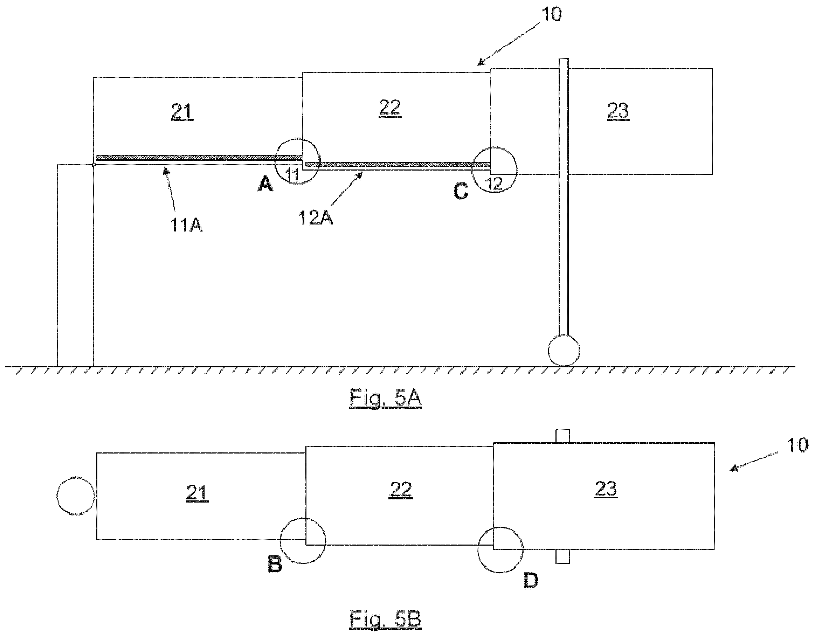

**FIGs. 5A-5B** illustrate elements of the safety system **1** in a plan and rising bridge schematic, wherein a first linear measurement sensor 11 is included which is installed in the intermediate tunnel **22.** The first sensor **11** includes a reader that reads a coded band **11a** installed along the inner tunnel **21** and that thus measures the overlapping distance between both tunnels **21, 22.**

The system **1** also includes a second linear distance measurement sensor **12** located in the outer tunnel **23** and which with a reader will read a coded band **12a** installed along the intermediate tunnel **22** and which will measure the overlapping distance between both tunnels **22, 23.**

The coded band **11a, 12a** may have an absolute (numerical) or incremental type coding (pulses for adding or subtracting). The measurement sensor **11** formed by the reader (not shown to be incorporated in the element 11, 12 itself) and the coded band **11a, 12a** will perform the linear measurement of a tunnel on the previous one and, after a calibration of the zero position, the measurement sensor **11, 12** provides a control unit with a value of the absolute position (if the sensor is of absolute type), or provides the corresponding pulses to perform the counting up or down (if the sensor is of incremental type).

Preferably, the assembly of the first linear sensor **11** is carried out laterally in the outer frame of the beginning of the intermediate tunnel (assembly in zone **A** seen rising and in zone **B** seen in plan). The assembly of the second linear sensor **12** is carried out in the same way in the outer frame of the beginning of the outer tunnel (assembly in zone **C** seen rising and in zone **D** seen in plan). Assembling the sensors **11, 12 to** one side of the tunnels is feasible provided that the measurement distance range between the band and the sensor head, stipulated by the sensor manufacturer, is greater than the mechanical clearance that the tunnels have in the horizontal plane during the telescoping movement.

Alternatively, the linear sensor could be installed at the bottom of the bridge **10,** where the above-described mechanical clearances do not represent a problem. The disadvantage of this is that, because normally at the bottom of the boards **10** there are other components (auxiliary equipment, trays of electrical or data cables, etc...) this installation could be more complex. Another option would be its mounting on the roof of the bridge **10,** where the mounting area is clearer, but which has the disadvantage of making it difficult to check and/or repair. The operator must go up to the roof of the bridge to perform an adjustment or maintenance action.

The location of the linear sensor assembly can be defined flexibly, individually according to the particular bridge where the safety system is to be installed.

Mention that encoder-type linear sensors with magnetic stripe are preferred because they offer greater robustness. However, the present system is not restricted to them alone and other types of sensors may be employed taking into account some additional limitations. For example, if cable potentiometric sensors are used, possible incidents caused by birds landing on it falsifying the measurement must be considered. Another type would be laser sensors associated with reflective mirrors, in this case they may provide incorrect measurements since they are quite sensitive to dirt problems and obstacles interrupting the laser beam.

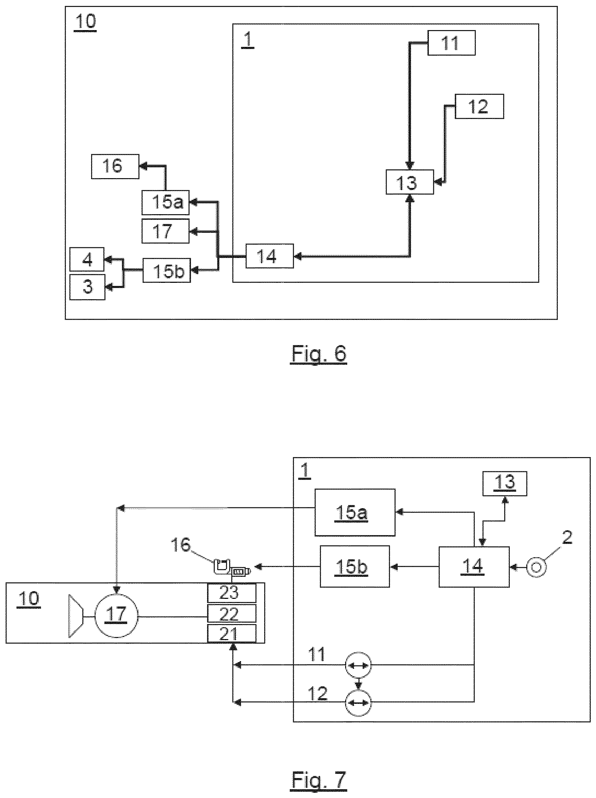

**FIG. 6** schematically illustrates a block diagram of the system **1** installed on a bridge **10,** the system **1** including a first linear sensor **11** and a second linear sensor **12.** The measurements of the sensors **11, 12** are received in a process unit **13** as explained with equation *E1.* The process unit **13** performs various operations with the measurements of the first linear sensor **11** and the second linear sensor **12.** In particular, for the case of two intermediate tunnels (FIG. 2B) would require a third linear sensor and so forth for more intermediate tunnels.

Based on the result of the performed operations, the process unit **13** generates an alarm instruction which is sent to a control unit **14.** The control unit **14** may be in the bridge cabin **10** or at a remote location. In turn, the control unit **14** can be an existing element of the bridge **10,** so it must be configured to be coupled with the process unit **13** or be an independent control unit of the system **1.** The control unit **14** in communication with the process unit **13** may activate one or more actuators **15a** to actuate the braking unit **16** and slow the movement of the intermediate tunnel **22** with the inner tunnel **21.** Also the system **1** de-energizes the translation **4** and lifting mechanism **3,** if so configured, for example, with an actuator **15b.**

The control unit **14** is implemented to perform various checks. Each linear sensor **11, 12** of neighboring tunnel pairs **21-22** and **22-23** must provide a processed measure indicating a no-fault diagnosis. The system **1** can add several checks to know that the linear sensors **11, 12** are calibrated, that the bridge **10** is switched on and that the position of the braking unit **16** is consistent with the command order.

The calibration of the sensors is based on a coding measurement process. The bridge is brought to a known point (zero point), for example, at the retraction limit position. At that limit point a value is assigned to the distance measurement, in this case 0 meters. Depending on whether it is an incremental type or an absolute type linear sensor, the control unit performs different calculations: If the sensor is incremental the control unit is configured to add or subtract the measurement corresponding to the resolution of the sensor each time it receives an addition or subtraction pulse. If the sensor is absolute, the control unit **14** receives a coded value which it has to translate into length units according to data provided by the manufacturer. Once the sensors **11, 12** have been calibrated, logical checks are carried out, such as: that when advancing during an extension maneuver the measurement increases (instead of decreasing during a retraction maneuver), or that, in any case, a measurement does not exceed the limit of extension or retraction of the bridge **10.**

The braking unit **16** is preferably provided with a brake caliper with an electric actuator to facilitate its being verifiable. Some type of mechanical interlocking may also be implemented, such as a toothed locking mechanism by the action of an electrically driven rod.

For safety, the braking unit **16** may be implemented so that, in the rest state, it is actuated (braked), and when energized, it is released and allows movement. Thus, in the event of a failure in the power supply, the predetermined state is that of braking. By means of an activation sensor (not shown) that provides feedback and informs the control unit **14** or the process unit **13** about whether or not the braking unit is acting or the monitoring of the braking actuation can be carried out.

**FIG. 7** shows different signals that are generated to monitor the operation of the bridge **10** during the telescoping movements of the tunnels **21, 22, 23** and to perform checks of the operation of the safety system 1 itself, via, for example, a manual push-button **2.**

If a fault is detected, the actuator **15a** actuates the braking unit **16** and the actuator **15b** de-energizes the motors of the translation **4** and of the elevation **3,** so that no movement of the tunnels 21, 22, 23 occurs. Each linear sensor **11, 12** allows directly or indirectly measuring a relative distance between a different pair of tunnels, either by extension or retraction of the bridge **10.** A processing unit **13** receives data of the measurements made by the linear sensors **11, 12,** compares the measurements and according to the differences between what each of the measurements has varied between one moment and another, it is determined whether they are indicative of a correct operation or of a failure. A check may also be implemented for the measures themselves, if they fall within or outside an expected safety range/threshold.

Several levels of indication can be configured according to thresholds associated with the degree of difference between measures and with these also various types of actions, for example:

Small difference grade: It would mean a loosening of the cable that entails a de-synchronization or may be indicative prior to the breakage of the cable. In this case a warning is generated, for example, through an interface associated with the control unit, without the need to block next maneuvers or to stop those already started but informing the operator for eventual maintenance or review (for example, by sending a message to a central or to the interface). For small, a difference of less than the threshold of 5% compared to the expected value should be understood.

Large difference degree: It would mean a break of one of the cables and leads to the generation of an alarm instruction with immediate activation of the braking unit for ongoing maneuvers, and also to block the start of extension-retraction, translation or lifting maneuvers by disabling them through the control unit. For large, a difference greater than the threshold of 5% compared to the expected value should be understood.

However, the 5% percentage threshold of the above example may be configurable to conform to loosen (e.g. 7%, 10%, 15%, etc.) or stricter (e.g. 1 %, 2%, 3%, etc.) specific specifications.

The present invention is not limited to the particular embodiments described above, but the invention will include all embodiments falling within the scope of the appended claims.

## Claims

1. Safety system (1) for a boarding bridge (10, 100), wherein the boarding bridge (10, 100) is telescopic and comprises at least three tunnels (21, 22, 23; 210, 220, 230, 240), wherein the tunnels are connected by at least two cables (51, 52, 53), wherein the system comprises:

   - a processing unit (13) configured to examine a telescoping movement of the boarding bridge (10, 100);

   wherein the system is **characterized in that** it comprises:

   a first sensor (11) configured to measure a first overlapping distance between a first pair of neighboring tunnels;
   a second sensor (12) configured to measure a second overlapping distance between a second pair of neighboring tunnels different from the first;
   wherein, to examine the telescoping movement, the processing unit (13) is configured to:

   - check whether the telescoping movement is associated with a retraction or extension maneuver exerted by the action of the cables (51, 52, 53, 54),
   - determine, in case of retraction or extension maneuver, a variation in the first overlapping distance and a variation in the second overlapping distance,
   - compare both variations, and
   - generate an alarm instruction if the variations are different and greater than a safety threshold set for said maneuver.

2. Safety system (1) for a boarding bridge (10, 100) according to claim 1, comprising a control unit (14) configured to receive the alarm instruction and to stop an ongoing maneuver of retraction or extension of the bridge (10, 100).

3. Safety system (1) for a boarding bridge (10, 100) according to claim 1 or 2, wherein the control unit (14) is configured to stop an ongoing maneuver of movements in the lifting of the bridge (10, 100).

4. Safety system (1) for a boarding bridge (10, 100) according to claim 2 or 3, wherein the control unit (14) is configured to disable the start of a new maneuver, wherein the new maneuver is one of the following: retraction, extension, movements in the elevation of the boarding bridge (10, 100).

5. Safety system (1) for a boarding bridge (10, 100) according to any one of the preceding claims, comprising a braking unit (16) with at least one actuator (15a, 15b) configured to prevent a telescoping movement of a pair of neighboring tunnels (21, 22; 22, 23) or a translation and/or lifting movement of the bridge (10, 100).

6. Safety system (1) for a boarding bridge (10, 100) according to claim 5, comprising a brake caliper electrically operable by the actuator (15a, 15b).

7. Safety system (1) for a boarding bridge (10, 100) according to claim 6, wherein, in the absence of electrical energy, the brake caliper is in locking position.

8. Safety system (1) for a boarding bridge (10, 100) according to any one of the preceding claims 2 to 7, wherein the control unit (14) is configured to check whether there is a fault in a sensor (11, 12).

9. Safety system (1) for a boarding bridge (10, 100) according to any one of the preceding claims 2 to 8, wherein the control unit (14) is configured to calibrate at least one sensor (11, 12).

10. Safety system (1) for a boarding bridge (10, 100) according to any one of the preceding claims 1 to 9, wherein the processing unit (13) is configured to define a surveillance threshold and to generate a warning when variations of the overlapping distances are within the safety threshold but outside the surveillance threshold.

11. Boarding bridge (10, 100) comprising the safety system (1) according to any one of the preceding claims 1 to 10.

## Patentansprüche

1. Sicherheitssystem (1) für eine Fluggastbrücke (10, 100), wobei die Fluggastbrücke (10, 100) teleskopisch ist und mindestens drei Tunnel (21, 22, 23; 210, 220, 230, 240) umfasst, wobei die Tunnel durch mindestens zwei Kabel (51, 52, 53) verbunden sind, wobei das System Folgendes umfasst:

- eine Verarbeitungseinheit (13), die dazu konfiguriert ist, eine Teleskopbewegung der Fluggastbrücke (10, 100) zu untersuchen;

wobei das System **dadurch gekennzeichnet ist, dass** es Folgendes umfasst:

einen ersten Sensor (11), der dazu konfiguriert ist, eine erste Überlappungsentfernung zwischen einem ersten Paar von benachbarten Tunneln zu messen;
einen zweiten Sensor (12), der dazu konfiguriert ist, eine zweite Überlappungsentfernung zwischen einem zweiten Paar von benachbarten Tunneln zu messen, das sich vom ersten unterscheidet;
wobei, um die Teleskopbewegung zu untersuchen, die Verarbeitungseinheit (13) zu Folgendem konfiguriert ist:

- Prüfen, ob die Teleskopbewegung einem Einfahr- oder Verlängerungsmanöver zugeordnet ist, das durch die Wirkung der Kabel (51, 52, 53, 54) ausgeübt wird,
- Bestimmen, im Falle eines Einfahr- oder Verlängerungsmanövers, einer Variation der ersten Überlappungsentfernung und einer Variation der zweiten Überlappungsentfernung,
- Vergleichen der beiden Variationen, und
- Generieren eines Alarmbefehls, falls die Variationen unterschiedlich und größer als ein für das Manöver festgelegter Sicherheitsschwellenwert sind.

2. Sicherheitssystem (1) für eine Fluggastbrücke (10, 100) nach Anspruch 1, umfassend eine Steuereinheit (14), die dazu konfiguriert ist, den Alarmbefehl zu empfangen und ein laufendes Manöver zum Einfahren oder Verlängern der Brücke (10, 100) zu stoppen.

3. Sicherheitssystem (1) für eine Fluggastbrücke (10, 100) nach Anspruch 1 oder 2, wobei die Steuereinheit (14) dazu konfiguriert ist, ein laufendes Manöver von Bewegungen beim Anheben der Brücke (10, 100) zu stoppen.

4. Sicherheitssystem (1) für eine Fluggastbrücke (10, 100) nach Anspruch 2 oder 3, wobei die Steuereinheit (14) dazu konfiguriert ist, den Start eines neuen Manövers zu deaktivieren, wobei das neue Manöver eines der Folgenden ist: Einfahren, Verlängern, Bewegungen beim Anheben der Fluggastbrücke (10, 100).

5. Sicherheitssystem (1) für eine Fluggastbrücke (10, 100) nach einem der vorhergehenden Ansprüche, umfassend eine Bremseinheit (16) mit mindestens einem Aktuator (15a, 15b), der dazu konfiguriert ist, eine Teleskopbewegung eines Paares benachbarter Tunnel (21, 22; 22, 23) oder eine Translations- und/oder Hubbewegung der Brücke (10, 100) zu verhindern.

6. Sicherheitssystem (1) für eine Fluggastbrücke (10, 100) nach Anspruch 5, umfassend einen Bremssattel, der durch den Aktuator (15a, 15b) elektrisch betätigt werden kann.

7. Sicherheitssystem (1) für eine Fluggastbrücke (10, 100) nach Anspruch 6, wobei der Bremssattel in Abwesenheit von elektrischer Energie in der Verriegelungsposition ist.

8. Sicherheitssystem (1) für eine Fluggastbrücke (10, 100) nach einem der vorhergehenden Ansprüche 2 bis 7, wobei die Steuereinheit (14) dazu konfiguriert ist, zu prüfen, ob ein Fehler in einem Sensor (11, 12) vorliegt.

9. Sicherheitssystem (1) für eine Fluggastbrücke (10, 100) nach einem der vorhergehenden Ansprüche 2 bis 8, wobei die Steuereinheit (14) dazu konfiguriert ist, mindestens einen Sensor (11, 12) zu kalibrieren.

10. Sicherheitssystem (1) für eine Fluggastbrücke (10, 100) nach einem der vorhergehenden Ansprüche 1 bis 9, wobei die Verarbeitungseinheit (13) dazu konfiguriert ist, einen Überwachungsschwellenwert zu definieren und eine Warnung zu generieren, wenn Variationen der Überlappungsentfernungen innerhalb des Sicherheitsschwellenwertes, aber außerhalb des Überwachungsschwellenwertes liegen.

11. Fluggastbrücke (10, 100), umfassend das Sicherheitssystem (1) nach einem der vorhergehenden Ansprüche 1 bis 10.

**Revendications**

1. Système de sécurité (1) pour une passerelle d'embarquement (10, 100), dans lequel la passerelle d'embarquement (10, 100) est télescopique et comprend au moins trois tunnels (21, 22, 23; 210, 220, 230, 240), dans lequel les tunnels sont reliés par au moins deux câbles (51, 52, 53), dans lequel le système comprend :

une unité de traitement (13) configurée pour examiner un mouvement télescopique de la passerelle d'embarquement (10, 100) ;
dans lequel le système est **caractérisé en ce**

**qu'**il comprend :

un premier capteur (11) configuré pour mesurer une première distance de recouvrement entre une première paire de tunnels voisins ;

un deuxième capteur (12) configuré pour mesurer une deuxième distance de recouvrement entre une deuxième paire de tunnels voisins différente de la première ;

dans lequel, pour examiner le mouvement télescopique, l'unité de traitement (13) est configurée pour :

vérifier si le mouvement télescopique est associé à une manœuvre de rétraction ou d'extension exercée par l'action des câbles (51, 52, 53, 54),

déterminer, en cas de manœuvre de rétraction ou d'extension, une variation de la première distance de recouvrement et une variation de la deuxième distance de recouvrement,

comparer les deux variations, et

générer une instruction d'alarme si les variations sont différentes et supérieures à un seuil de sécurité fixé pour ladite manœuvre.

2. Système de sécurité (1) pour une passerelle d'embarquement (10, 100) selon la revendication 1, comprenant une unité de commande (14) configurée pour recevoir l'instruction d'alarme et pour arrêter une manœuvre en cours de rétraction ou d'extension de la passerelle (10, 100).

3. Système de sécurité (1) pour une passerelle d'embarquement (10, 100) selon la revendication 1 ou 2, dans lequel l'unité de commande (14) est configurée pour arrêter une manœuvre en cours de mouvements de levage de la passerelle (10, 100).

4. Système de sécurité (1) pour une passerelle d'embarquement (10, 100) selon la revendication 2 ou 3, dans lequel l'unité de commande (14) est configurée pour empêcher le démarrage d'une nouvelle manœuvre, la nouvelle manœuvre étant l'une des suivantes : rétraction, extension, mouvements d'élévation de la passerelle d'embarquement (10, 100).

5. Système de sécurité (1) pour une passerelle d'embarquement (10, 100) selon l'une quelconque des revendications précédentes, comprenant une unité de freinage (16) avec au moins un actionneur (15a, 15b) configuré pour empêcher un mouvement télescopique d'une paire de tunnels voisins (21, 22; 22, 23) ou un mouvement de translation et/ou de levage de la passerelle (10, 100).

6. Système de sécurité (1) pour une passerelle d'embarquement (10, 100) selon la revendication 5, comprenant un étrier de frein commandé électriquement par l'actionneur (15a, 15b).

7. Système de sécurité (1) pour une passerelle d'embarquement (10, 100) selon la revendication 6, dans lequel, en l'absence d'énergie électrique, l'étrier de frein est en position de verrouillage.

8. Système de sécurité (1) pour une passerelle d'embarquement (10, 100) selon l'une quelconque des revendications précédentes 2 à 7, dans lequel l'unité de commande (14) est configurée pour vérifier s'il existe un défaut dans un capteur (11, 12).

9. Système de sécurité (1) pour une passerelle d'embarquement (10, 100) selon l'une quelconque des revendications précédentes 2 à 8, dans lequel l'unité de commande (14) est configurée pour calibrer au moins un capteur (11, 12).

10. Système de sécurité (1) pour une passerelle d'embarquement (10, 100) selon l'une quelconque des revendications précédentes 1 à 9, dans lequel l'unité de traitement (13) est configurée pour définir un seuil de surveillance et pour générer un avertissement lorsque les variations des distances de recouvrement sont comprises dans le seuil de sécurité mais en dehors du seuil de surveillance.

11. Passerelle d'embarquement (10, 100) comprenant le système de sécurité (1) selon l'une quelconque des revendications précédentes 1 à 10.

Fig. 1

Fig. 2A

Fig. 2B

Fig. 3A

Fig. 3B

Fig. 4A

Fig. 4B

Fig. 4C

Fig. 4D

EP 4 400 428 B1

Fig. 5A

Fig. 5B

EP 4 400 428 B1

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 206141864 U
- JP S63188599 A

- US 20200262584 A1